# EUROPÄISCHE PATENTSCHRIFT

(11) **EP 3 621 769 B1**
(45) Veröffentlichungstag und Bekanntmachung des Hinweises auf die Patenterteilung: **22.03.2023**
(21) Anmeldenummer: 18722052.0
(22) Anmeldetag: 04.05.2018
(51) Int. Cl.: B23H 5/04, B24B 47/22, B24B 49/10, G05B 19/401, B23Q 17/22

(54) **SCHLEIF- UND/ODER ERODIERMASCHINE SOWIE VERFAHREN ZUR VERMESSUNG UND/ODER REFERENZIERUNG DER MASCHINE**
GRINDING AND/OR ERODING MACHINE, AND METHOD FOR MEASURING AND/OR REFERENCING THE MACHINE
MACHINE DE PONÇAGE ET/OU D'USINAGE PAR ÉLECTRO-ÉROSION, AINSI QUE PROCÉDÉ SERVANT À MESURER ET/OU À RÉFÉRENCER LA MACHINE

(30) Priorität: 11.05.2017 DE 102017110198
(43) Veröffentlichungstag der Anmeldung: 18.03.2020
(73) Patentinhaber: Walter Maschinenbau GmbH, 72072 Tübingen (DE)
(72) Erfinder: HEGELE, Siegfried, 72144 Dusslingen (DE); SCHNAIBLE, Steffen, 71032 Böblingen (DE)
(74) Vertreter: Rüger Abel Patentanwälte PartGmbB
(86) Internationale Anmeldenummer: PCT/EP2018/061579
(87) Internationale Veröffentlichungsnummer: WO 2018/206455

(56) Entgegenhaltungen:
- EP-A1- 2 165 803
- EP-A2- 0 304 907
- EP-A2- 0 737 903
- EP-A2- 1 197 819
- WO-A1-2016/128074
- WO-A2-2015/136075

## Beschreibung

Die Erfindung betrifft eine Schleif- und/oder Erodiermaschine sowie ein Verfahren zum Vermessen bzw. Referenzieren der Maschine.

Eine Schleif- und/oder Erodiermaschine hat mehrere Maschinenachsen, um ein zu bearbeitendes Werkstück relativ zu einem Werkzeug bewegen und positionieren zu können. Für eine genaue Bearbeitung ist es erforderlich, die Relativposition der Maschinenachsen bezogen auf ein ortsfestes Koordinatensystem der Maschinenbasis oder des Maschinengestells zu kennen.

DE 10 2008 004 849 B4 schlägt vor, eine Mehrachs-Referenziersensoranordnung vorzusehen, um in Bearbeitungspausen mit den zur Bearbeitung verwendeten Komponenten und den verwendeten translatorischen sowie rotatorischen Achsen eine Referenzierung durchzuführen, indem die Relativlage zwischen einer Werkstückhalteeinrichtung und einem Werkzeug in mehreren Dimensionen bestimmt wird. Hierzu weist die Mehrachs-Referenziersensoranordnung für jede Raumachsrichtung jeweils einen Referenzsensor auf, der als Berührungssensor oder als Näherungssensor ausgeführt sein kann.

WO 2016/128074 A1 beschreibt eine Werkzeugmaschine mit einer zur Aufnahme eines Werkzeugs eingerichteten Spindel und einer zum Halten eines Werkstücks eingerichteten Werkstückhalterung. Die Spindel und die Werkstückhalterung sind relativ zueinander bewegbar. Zwischen dem Werkstück und dem Werkzeug wird eine Spannung angelegt. Ein Kontakt zwischen dem Werkzeug und dem Werkstück kann zur Positionsbestimmung des Werkstücks und/oder des Werkzeugs basierend auf einem Stromfluss erfasst werden. Ähnliche Einrichtungen sind auch aus WO 2015/136075 A2 und EP 1 197 819 A2 bekannt.

Das Verwenden von Berührungssensoren oder Kraftsensoren hat muss sichergestellt werden, dass die Kraft, mit der das Werkzeug oder das Werkstück gegen den jeweiligen Referenzsensor gedrückt wird, sehr genau eingestellt werden kann. Die Anforderungen an die Genauigkeit und Konstanz der Sensoren sind damit sehr hoch. Wenn Näherungssensoren verwendet werden, müssen diese sehr genau justiert werden, um einzustellen welche Stelle an dem sich annähernden Element detektiert wird. Alle Sensortypen müssen eine hohe Erfassungsgenauigkeit mit sehr geringer Toleranz aufweisen. Außerdem ist das Verwenden von Berührungs-, Ktraft- oder Näherungssensoren in Werkzeugmaschinen häufig deswegen problematisch, weil sie Verschmutzungen durch Späne, Kühlflüssigkeit oder dergleichen ausgesetzt sind.

Es kann daher als Aufgabe der vorliegenden Erfindung angesehen werden, eine Schleif- und/oder Erodiermaschine sowie ein Verfahren zur Vermessung oder Referenzierung der Maschine bereitzustellen, das mit einfachen Mitteln eine hohe Genauigkeit bereitstellt.

Diese Aufgabe wird durch eine Schleif- und/oder Erodiermaschine mit den Merkmalen des Patentanspruches 1 sowie ein Verfahren mit den Merkmalen des Patentanspruches 15 gelöst.

Erfindungsgemäß weist die Schleif- und/oder Erodiermaschine eine um eine Spindelachse antreibbare Werkzeugspindel auf, in der ein Schleif- oder Erodierwerkzeug angeordnet werden kann. Für ein zu bearbeitendes Werkstück ist eine Werkstückhalteeinrichtung vorhanden. Die Maschine verfügt über eine Maschinenachsanordnung mit mehreren Maschinenachsen. Jede Maschinenachse kann als rotatorische oder translatorische Maschinenachse ausgeführt sein. Es können bis zu sechs Maschinenachsen vorhanden sein, die dazu eingerichtet sind, die Werkzeugspindel bzw. ein dort vorhandenes Werkzeug relativ zur Werkstückhalteeinrichtung bzw. einem dort angeordneten Werkstück zu positionieren oder zu bewegen, um die gewünschte Bearbeitung durchführen zu können. Über eine Positionserfassungseinrichtung wird die Position jeder der vorhandenen Maschinenachsen erfasst. Die Positionserfassungseinrichtung kann hierfür Positionssensoren aufweisen, die die Position im jeweiligen translatorischen oder rotatorischen Freiheitsgrad messen. Es ist auch möglich, dass die Positionserfassungseinrichtung die Position einer Maschinenachse auf Basis anderer Größen ermittelt, die charakteristisch sind für die jeweilige Position. Es ist daher möglich, dass die Positionserfassung entweder auf Basis von direkt gemessenen Positionsistwerten oder diese Istposition beschreibenden indirekten Größen erfolgt.

Zum Vermessen oder Referenzieren werden elektrisch leitfähige Messkörper, vorzugsweise ein elektrisch leitfähiger Messdorn sowie eine elektrisch leitfähige Messscheibe verwendet. Der eine, erste Messkörper, insbesondere der Messdorn, kann in der Werkstückhalteeinrichtung angeordnet werden und der jeweils andere, zweite Messkörper, insbesondere die Messscheibe, kann in der Werkzeugspindel angeordnet werden. Zum Vermessen bzw. Referenzieren wird der zweite Messkörper mit einem Versorgungsspannungspotential verbunden, so dass am zweiten Messkörper eine Spannung anliegt, die vorzugsweise dem Versorgungsspannungspotential entspricht. Der in der Werkstückhalteeinrichtung angeordnete erste Messkörper wird mit einem definierten Bezugspotential elektrisch verbunden, das kleiner ist als die Spannung am zweiten Messkörper und beispielsweise kleiner als das Versorgungsspannungspotential. Als Bezugspotential dient vorzugsweise ein Massepotential (0 Volt). Der zweite Messkörper wird außerdem mit einer Überwachungseinrichtung verbunden.

Über eine Steuereinrichtung können die Messkörper relativ zueinander bewegt bzw. positioniert bzw. ausgerichtet werden. Die Steuereinrichtung der Maschine steuert die Maschinenachsen an, um die Messkörper derart relativ zueinander zu bewegen, dass sie an einer Kontaktstelle in Kontakt miteinander gelangen. Sobald dieser Kontakt an der Kontaktstelle entsteht, fließt ein Messstrom zwischen der den Messkörpern und vorzugsweise vom zweiten Messkörper mit höherem Potential zum ersten Messkörper mit geringerem Potential. Dieser Messstrom wird durch die mit dem zweiten Messkörper verbundene Überwachungseinrichtung erkannt. Sobald der Messstrom erkannt wird, wird die aktuelle Position der wenigstens einen angetriebenen Maschinenachse bzw. aller Maschinenachsen abgespeichert. Somit kann durch das Berühren zwischen den Messkörpern an der Kontaktstelle eine Referenzposition ermittelt werden. Das Ermitteln dieser Referenzposition kann sehr exakt erfolgen. Es hat sich gezeigt, dass der Messstrom sehr genau unmittelbar nach einer Berührung zwischen den Messkörpern erfasst werden kann. Zu diesem Zeitpunkt kann die entsprechende aktuelle Position als Referenzposition erfasst bzw. gespeichert werden. Unterschiede durch variierende Andrückkräfte zwischen den Messkörpern treten nicht auf.

Die Maschine bzw. das Verfahren kommt ohne aufwendige Sensorik aus. Die Erfassung des Messstromes kann außerhalb des Arbeitsbereiches der Maschine erfolgen. Empfindliche Sensoren innerhalb des Arbeitsbereichs der Maschine entfallen. Somit kann die Referenzierung bzw. Vermessung mit einfachen, kostengünstigen Mitteln bei gleichzeitig hoher Genauigkeit durchgeführt werden.

Vorzugsweise wird das Antreiben der wenigstens eine angetriebene Maschinenachse gestoppt, sobald die Berührung zwischen den Messkörpern festgestellt wurde. Dadurch werden große Andrückkräfte zwischen den Messkörpern vermieden.

Zur Vermessung bzw. Referenzierung wird eine Folge von Kontaktstellen nacheinander angefahren. Es sind zumindest zwei, drei oder mehr Kontaktstellen pro Folge vorhanden, um eine bestimmte Vermessung durchzuführen oder die Orientierung zwischen Maschinenachsen miteinander zu vergleichen. Dabei wird für die wenigstens eine Kontaktstelle eine Orientierung für eine oder mehrere rotatorische Maschinenachsen vorgegeben. Die Anfahrbewegung unmittelbar vor der und bis zur Berührung zwischen den Messkörpern erfolgt bevorzugt durch eine einzige, insbesondere translatorische Maschinenachse.

Der zweite Messkörper kann bei einem bevorzugten Ausführungsbeispiel als Messscheibe ausgeführt sein, die eine ringförmig geschlossene Umfangsfläche und eine Seitenfläche aufweist, wobei die die Umfangsfläche die Seitenfläche umschließt und sich daran anschließt. Beispielsweise kann die Messscheibe durch eine kreisförmig konturierte Scheibe gebildet sein. Es ist dabei möglich, dass die Messscheibe den anderen, ersten Messkörper mit der Umfangsfläche oder der Seitenfläche an der Kontaktstelle berührt. Dies hängt davon ab, wo die Kontaktstelle am ersten Messkörper, beispielsweise dem Messdorn, angeordnet ist und welche der Maschinenachsen zur Relativbewegung bis zum Erreichen dieser Kontaktstelle verwendet wird.

Um ein Vermessen bzw. Referenzieren aller Maschinenachsen der Schleif- und/oder Erodiermaschine vorzunehmen, entspricht die Anzahl der in einer Folge nacheinander angefahrenen Kontaktstellen vorzugsweise der Anzahl von denjenigen Maschinenachsen, die dazu eingerichtet sind, die Relativposition zwischen den Messkörpern zu ändern. Dabei wird eine Maschinenachse nicht berücksichtigt, die eine Drehung des ersten Messkörpers um seine Längsachse bewirken kann.

Bei einem bevorzugten Ausführungsbeispiel weist die Überwachungseinrichtung eine Überwachungseinheit auf. Die Überwachungseinheit kann Bestandteil der Steuereinrichtung sein oder mit der Steuereinrichtung kommunikationsverbunden sein.

Die Überwachungseinheit ist vorzugsweise dazu eingerichtet zu überwachen, ob der zweite Messkörper mit dem Versorgungsspannungspotential elektrisch verbunden ist. Ein entsprechendes Überwachungsergebnis kann zur Steuereinrichtung übermittelt oder der Steuereinrichtung auf andere geeignete Weise bereitgestellt werden. Die Steuereinrichtung kann in einen Sicherheitsbetriebsmodus umschalten, wenn die Überwachungseinheit festgestellt hat, dass die elektrische Verbindung zwischen dem zweiten Messkörper und dem Versorgungsspannungspotential hergestellt ist. Dadurch wird sozusagen erkannt, dass keine Werkstückbearbeitung, sondern eine Vermessung bzw. Referenzierung durchgeführt werden soll. Daraufhin wird der Sicherheitsbetriebsmodus aktiviert und die Steuereinrichtung steuert die Maschinenachsanordnung unter Einhaltung wenigstens einer Beschränkung des Sicherheitsbetriebsmodus an.

In dem Sicherheitsbetriebsmodus kann beispielsweise das Betreiben der Werkzeugspindel unterbunden werden, so dass verhindert wird, dass sich der zweite Messkörper um die Spindelachse dreht. Alternativ oder zusätzlich kann die Antriebskraft bzw. ein Antriebsmoment einer oder mehrerer Maschinenachsen auf eine Maximalkraft bzw. ein Maximaldrehmoment begrenzt werden. Dadurch können Beschädigungen an den Messkörpern durch zu große Andrückkräfte vermieden werden. Hierfür kann beispielsweise ein Elektromotor, der zur jeweiligen Maschinenachse gehört und deren Antrieb bildet, einer Drehmomentbegrenzung unterworfen werden, beispielsweise durch eine entsprechende Begrenzung des Motorstromes. Zur Kraft- oder Momentenbegrenzung der jeweiligen Maschinenachse kann beispielsweise eine Messung und Begrenzung des Motorstromes erfolgen.

Es ist vorteilhaft, wenn der zweite Messkörper über eine Anschlussleitung mit einem ersten Kontakt eines elektrischen Verbindungsbauteils elektrisch verbunden ist. Das elektrische Verbindungsbauteil kann außerdem einen zweiten Kontakt und einen dritten Kontakt aufweisen, die miteinander kurzgeschlossen sein können.

Zur elektrischen Verbindung mit dem Verbindungsbauteil kann ein elektrisches Gegenverbindungsbauteil vorhanden sein. Das Gegenverbindungsbauteil hat einen ersten Gegenkontakt, der mittels eines ersten Leiters über die Überwachungseinrichtung mit dem Versorgungsspannungspotential verbunden ist. In diesem ersten Leiter kann ein Überwachungsbauteil der Überwachungseinrichtung angeordnet sein, das eine Schaltfunktion bereitstellt, beispielsweise ein Transistor, ein Relais, ein Optokoppler oder dergleichen. Das Überwachungsbauteil kann vorzugsweise außerdem eine galvanische Trennung des ersten Leiters von einem Messschaltkreis bereitstellen.

Es ist außerdem vorteilhaft, wenn das Gegenverbindungsbauteil einen zweiten Gegenkontakt aufweist, der mittels eines zweiten Leiters mit dem Versorgungsspannungspotential verbunden ist. Zusätzlich kann optional ein dritter Gegenkontakt vorhanden sein, der mittels eines dritten Leiters mit der Überwachungseinrichtung und insbesondere der Überwachungseinheit der Überwachungseinrichtung verbunden ist.

Bei hergestellter Verbindung zwischen dem Verbindungsbauteil und dem Gegenverbindungsbauteil ist eine elektrische Verbindung zwischen dem ersten Kontakt und dem ersten Gegenkontakt hergestellt. Sofern vorhanden, wird dabei auch eine elektrische Verbindung zwischen dem zweiten Kontakt und dem zweiten Gegenkontakt und/oder zwischen dem dritten Kontakt und dem dritten Gegenkontakt hergestellt. Aufgrund des Kurzschlusses zwischen dem zweiten und dritten Kontakt wird somit bei hergestellter Verbindung zwischen dem Verbindungsbauteil und dem Gegenverbindungsbauteil eine elektrische Verbindung zwischen dem Versorgungsspannungspotential und der Überwachungseinrichtung bzw. der Überwachungseinheit hergestellt. Auf diese Weise kann das Verbinden des zweiten Messkörpers mit dem Versorgungsspannungspotential erkannt und beispielsweise der Sicherheitsbetriebsmodus aktiviert werden.

Vorteilhafte Ausgestaltungen der Erfindung ergeben sich aus den abhängigen Patentansprüchen, der Beschreibung und der Zeichnung. Nachfolgend werden bevorzugte Ausführungsbeispiele der Erfindung anhand der beigefügten Zeichnungen im Einzelnen erläutert. Es zeigen:

Figur 1 eine schematische, blockschaltbildähnliche Darstellung eines Ausführungsbeispiels einer Schleif- und/oder Erodiermaschine

Figur 2 ein Ausführungsbeispiel einer Schleif- und/oder Erodiermaschine gemäß dem Blockschaltbild aus Figur 1 in einer schematischen Seitenansicht,

Figur 3 eine Prinzipdarstellung eine Ausführungsbeispiels der elektrischen Verbindung einer Messscheibe mit einem Versorgungsspannungspotential und einer Überwachungseinrichtung sowie der elektrischen Verbindung eines Messdorns mit einem Bezugspotential,

Figuren 4-7 jeweils eine schematische Prinzipdarstellung in einer Seitenansicht (jeweils Figur a) und einer Draufsicht (jeweils Figur b) des Messdorns und der Messscheibe aus den Figuren 1-3 mit unterschiedlichen Kontaktstellen.

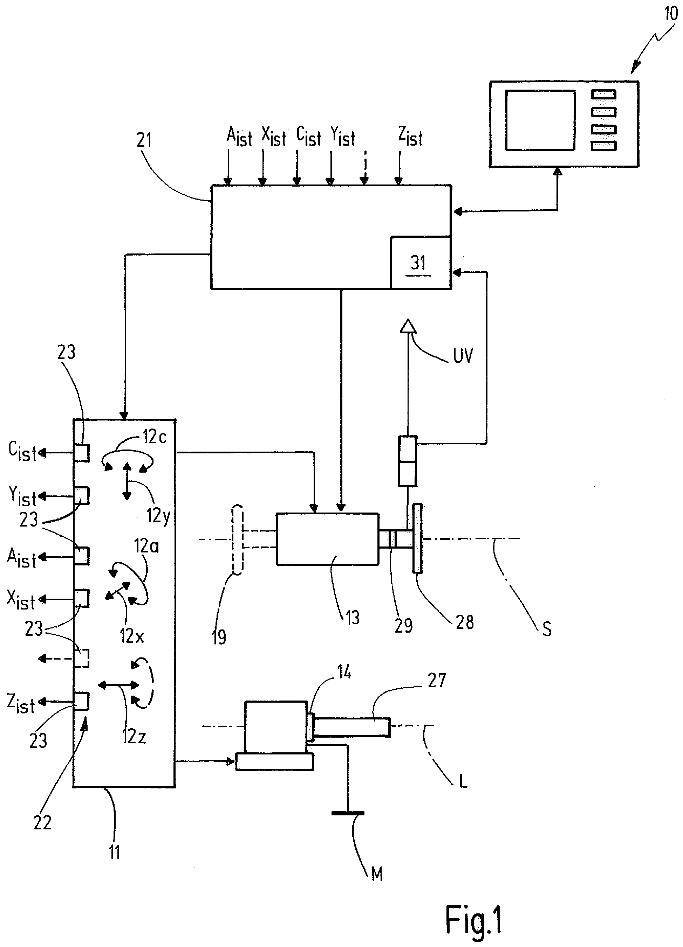

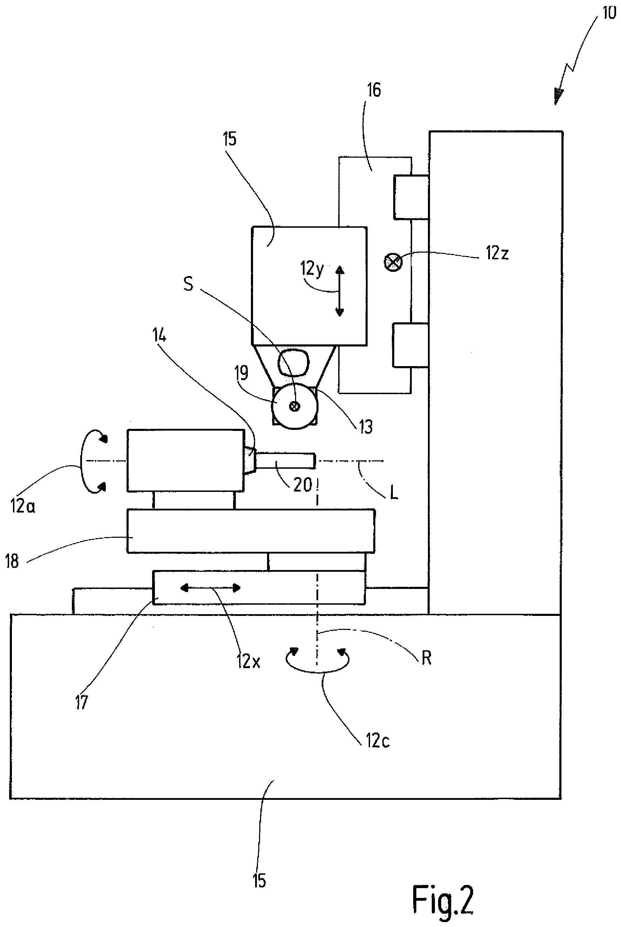

In den Figuren 1 und 2 ist ein Ausführungsbeispiel einer Schleif- und/oder Erodiermaschine 10 stark vereinfacht veranschaulicht. Die Schleif- und/oder Erodiermaschine 10 weist eine Maschinenachsanordnung 11 auf, die wenigstens eine und vorzugsweise mehrere translatorische und/oder rotatorische Maschinenachsen 12 aufweist. Bei dem hier veranschaulichten Ausführungsbeispiel hat die Achsanordnung 11 drei translatorische Achsen, nämlich eine X-Achse 12x, eine Y-Achse 12y sowie eine Z-Achse 12z. Außerdem weist die Maschinenachsanordnung 11 beispielsgemäß zwei rotatorische Maschinenachsen auf, eine A-Achse 12a und eine C-Achse 12c. Über die C-Achse 12c kann eine Rotation um eine parallel zur y-Richtung bzw. zur Y-Achse 12y verlaufende Rotationsachse R durchgeführt werden. Mittels der A-Achse kann eine Rotation um eine Achse durchgeführt werden, die sich parallel zur x-Richtung bzw. zur X-Achse 12x erstreckt. Optional kann zusätzlich eine rotatorische Achse vorhanden sein, mit der eine Drehung um eine Rotationsachse durchgeführt werden kann, die sich parallel zur z-Richtung bzw. zur Z-Achse 12z erstreckt. Bei dem in Figur 2 veranschaulichten Ausführungsbeispiel sind lediglich fünf Maschinenachsen 12 vorhanden, nämlich drei translatorische Maschinenachsen 12x, 12y, 12z sowie die beiden rotatorischen Maschinenachsen 12a und 12c.

Mittels der Maschinenachsanordnung 11 kann eine Werkzeugspindel 13 und/oder eine Werkzeughalteeinrichtung 14 relativ zu einer Maschinenbasis 15 bewegt werden, so dass auch eine Relativbewegung zwischen der Werkzeugspindel 13 und der Werkstückhalteeinrichtung 14 erreichbar ist. Dabei können unterschiedliche Achskonfigurationen verwendet werden. Zur Bewegung der Werkzeugspindel 13 können eine oder mehrere translatorische oder rotatorische Maschinenachsen 12 und zur Bewegung der Werkstückhalteeinrichtung 14 entsprechend andere translatorische bzw. rotatorische Maschinenachsen 12 verwendet werden. Bei dem in Figur 2 gezeigten Ausführungsbeispiel dient die Y-Achse 12y und die Z-Achse 12z zur Bewegung der Werkzeugspindel 13, während die X-Achse 12x und die C-Achse 12c zur Bewegung der Werkstückhalteeinrichtung 14 verwendet werden. Die A-Achse 12a dient zum Antreiben der Werkstückhalteeinrichtung 14 um ihre Längsachse L.

Die Maschinenachsen 12 der Achsanordnung 11 sind in Figur 1 lediglich symbolisch und in Figur 2 lediglich durch ihre schematisch angedeuteten Rotationsachsen bzw. Schlitten veranschaulicht. Die Werkzeugspindel 13 sitzt an einem ersten Schlitten 15, der mittels der Y-Achse 12y relativ zu einem zweiten Schlitten 16 bewegbar ist. Der den ersten Schlitten 15 tragende zweiten Schlitten 16 ist mittels der Z-Achse 12z relativ zur Maschinenbasis 15 bewegbar. Ein dritter Schlitten 17 ist über die X-Achse 12x bewegbar an der Maschinenbasis 15 angeordnet und trägt die C-Achse 12c. Mittels der C-Achse 12c kann eine Rotation eines Trägers 18 um eine Rotationsachse R durchgeführt werden. Auf dem Träger 18 sitzt wiederum die A-Achse 12a und die Werkstückhalteeinrichtung 14, wobei die A-Achse 12a die Werkstückhalteeinrichtung 14 um die Längsachse L antreiben kann.

Somit kann mittels der Maschinenachsanordnung 11 eine Ausrichtung bzw. Positionierung der Werkzeugspindel 13 relativ zur Werkstückhalteeinrichtung 14 durchgeführt werden. Die Werkzeugspindel 13 dient zur Aufnahme eines Werkzeugs 19, beispielsweise eines Schleifwerkzeugs und/oder eines Erodierwerkzeugs. Mittels der Werkzeugspindel 13 ist ein Werkzeug 19, wie beispielsweise eine Schleifscheibe, um die Spindelachse S drehend antreibbar. Die Werkzeugspindel 13 bzw. der dazugehörende Spindelantrieb (nicht veranschaulicht) wird durch eine Steuereinrichtung 21 angesteuert, die eine gewünschte Drehzahl vorgeben kann.

Die Werkstückhalteeinrichtung 14 dient zum Aufnehmen bzw. Spannen eines Werkstücks 20. Das Werkstück 20 kann mittels der die A-Achse 12a um seine Längsachse L oder mittels der die C-Achse 12c um die Rotationsachse R gedreht bzw. geschwenkt werden. Durch eine Schwenkbewegung um die Rotationsachse R mittels der C-Achse 12c wird der Winkel zwischen der Längsachse L und der Spindelachse S eingestellt. Dieser Winkel kann einen beispielsgemäß zwischen 0° und 180° variiert werden.

Über die Steuereinrichtung 21 wird auch die Maschinenachsanordnung 11 derart angesteuert, dass jede Maschinenachse 12 individuell antreibbar ist. Die Position jeder Maschinenachse 12 wird durch eine Positionserfassungseinrichtung 22 erfasst. Dabei kann jeder Maschinenachse 12 jeweils ein Positionssensor 23 zugeordnet sein, um den jeweiligen Positionsistwert Aᵢₛₜ, Cᵢₛₜ, Xᵢₛₜ, Yᵢₛₜ, Zᵢₛₜ zu erfassen und an die Steuereinrichtung 21 zu übermitteln. Wenn eine weitere rotative Achse vorhanden ist, kann auch ein entsprechender weiterer Istwert von der Positionserfassungseinrichtung 22 an die Steuereinrichtung 21 übermittelt werden, was in Figur 1 gestrichelt veranschaulicht ist.

Alternativ zu der vorgeschlagenen Ausführungsform, kann die Positionserfassung durch die Positionserfassungseinrichtung 22 auch auf Basis von anderen Größen erfolgen, die charakteristisch sind für die jeweilige Istposition. Eine direkte Messung der Positionsistwerte ist dann nicht erforderlich.

Die Schleif- und/oder Erodiermaschine 10 ist beispielsgemäß zur Durchführung eines Verfahrens zum Vermessen oder Referenzieren der Maschinenachsen 12 eingerichtet. Hierzu kann anstelle eins Werkstücks ein elektrisch leitfähiger erster Messkörper, beispielsgemäß ein Messdorn 27, in die Werkstückhalteeinrichtung 14 eingesetzt werden. Außerdem kann ein elektrisch leitfähiger zweiter Messkörper, beispielsgemäß eine Messscheibe 28, in die Werkzeugspindel 13 anstelle eines Werkzeugs 19 eingesetzt werden. Der Messdorn 27 ist mit einem festen Bezugspotential und beispielsgemäß mit Masse M elektrisch verbunden. Die Verbindung kann über eine Leitung unmittelbar am Messdorn 27 oder mittelbar über die Werkstückhalteeinrichtung 14 erfolgen.

Die Messscheibe 28 ist elektrisch mit einem Versorgungsspannungspotential UV verbunden. Über eine elektrische Isolation 29 ist ein Schaftabschnitt 30 des mit der Messscheibe 28 verbundenen Schafts gegenüber der Messscheibe 28 elektrisch isoliert. Über den Schaftabschnitt 30 wird die Messscheibe 28 in der Werkzeugspindel 13 aufgenommen. Das an der Messscheibe 28 anliegende Versorgungsspannungspotential UV liegt daher nicht an der Werkzeugspindel 13 an und ein Stromfluss in oder über die Werkzeugspindel 13 ist durch die elektrische Isolation 29 vermieden.

Die Messscheibe 28 ist außerdem elektrisch mit einer Überwachungseinrichtung 31 verbunden. Die Überwachungseinrichtung 31 weist eine Überwachungseinheit 32 auf. Die Überwachungseinrichtung 31 oder zumindest die Überwachungseinheit 32 kann Bestandteil der Steuereinrichtung 21 sein oder mit der Steuereinrichtung 21 kommunikationsverbunden sein. Die elektrische Verbindung zwischen der Überwachungseinrichtung 31 und der Messscheibe 28 erfolgt über eine Verbindungseinrichtung mit einem Verbindungsbauteil 33 und einem Gegenverbindungsbauteil 34. Das Verbindungsbauteil 33 ist vorzugsweise als Stecker und das Gegenverbindungsbauteil 34 als Buchse ausgeführt. Das Gegenverbindungsbauteil 34 kann beispielsweise im Bereich der Werkzeugspindel 13 an der Schleif- und/oder Erodiermaschine 10 befestigt sein, beispielsweise am ersten Schlitten 15 oder eine mit dem ersten Schlitten 15 verbundenen Träger für die Werkzeugspindel 13.

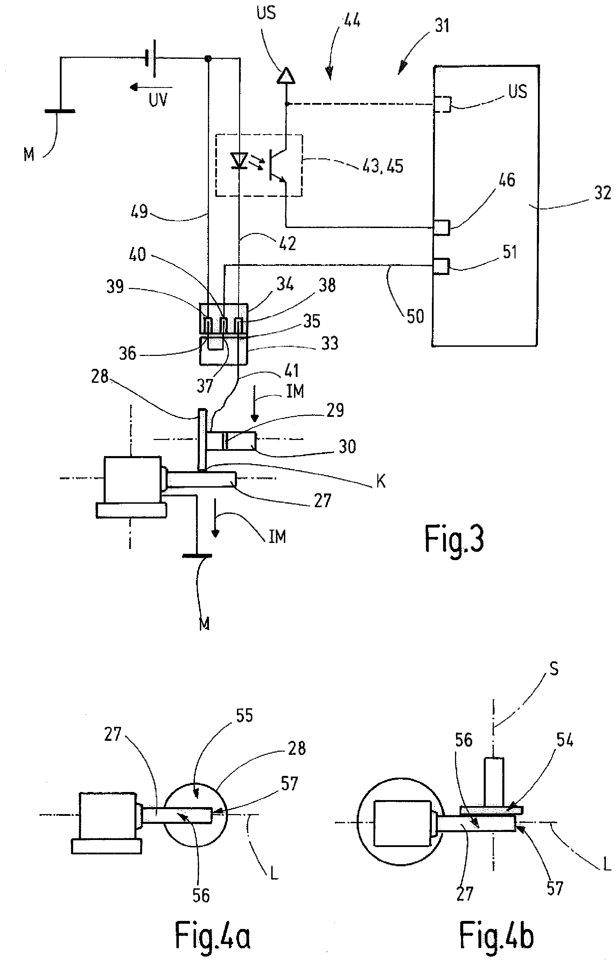

Das Verbindungsportal 33 hat beim Ausführungsbeispiel wenigstens einen elektrischen ersten Kontakt 35 und beispielsgemäß zusätzlich einen elektrischen zweiten Kontakt 36 und einen elektrischen dritten Kontakt 37. Die elektrischen Kontakte 35, 36, 37 können als Steckerstifte ausgeführt sein. Wie es anhand von Figur 3 zu erkennen ist, sind der zweite Kontakt 36 und der dritte Kontakt 37 durch das Verbindungsbauteil 33 bzw. im Verbindungsbauteil 33 elektrisch kurzgeschlossen.

Das Gegenkontaktbauteil 34 hat zumindest einen elektrischen ersten Gegenkontakt 38. Beim Ausführungsbeispiel sind zusätzlich ein elektrischer zweiter Gegenkontakt 39 und ein elektrischer dritter Gegenkontakt 40 vorhanden. Die Gegenkontakte 38, 39, 40 können als Buchsen ausgeführt sein, um einen jeweils zugeordneten Steckerstift aufzunehmen.

Der erste elektrische Kontakt 35 ist über eine Anschlussleitung 41 elektrisch mit der Messscheibe 28 verbunden. Die Anschlussleitung 41 ist durch eine flexible Leitung, beispielsweise ein Spiralkabel gebildet.

Der erste Gegenkontakt 38 ist mittels eines ersten Leiters 42 mit der Überwachungseinrichtung 31 verbunden. Beim Ausführungsbeispiel ist der erste Leiter 42 über ein Überwachungsbauteil 43 mit dem Versorgungsspannungspotential UV elektrisch verbunden. Das Überwachungsbauteil 43 hat eine elektrische Schaltfunktion und dient dazu, einen elektrischen Schaltvorgang auszulösen, wenn ein Messstrom IM durch den ersten Leiter 42 fließt. Dieser elektrische Schaltvorgang wird von der Überwachungseinheit 32 erfasst, die mit dem Überwachungsbauteil 43 elektrisch verbunden ist.

Bei dem hier beschriebenen Ausführungsbeispiel stellt das Überwachungsbauteil 43 außerdem eine galvanische Trennung bereit. Die primäre Seite des Überwachungsbauteils 43 ist in den ersten Leiter 42 geschaltet, während die sekundäre Seite des Überwachungsbauteils 43 in einem Sekundärschaltkreis 44 angeordnet ist.

Das Überwachungsbauteil 43 ist beim Ausführungsbeispiel durch einen Optokoppler 45 gebildet. Eine Optokopplerdiode ist anodenseitig mit dem Versorgungsspannungspotential UV und kathodenseitig mit dem ersten Gegenkontakt 38 elektrisch verbunden. Ein Optokopplertransistor ist kollektorseitig mit einem Sekundärspannungspotential US und emitterseitig mit einem ersten Überwachungseingang 46 elektrisch verbunden. Sobald ein Messstrom IM durch den ersten Leiter 42 und mithin die Optokopplerdiode fließt, wird der Optokopplertransistor leitend und verbindet den ersten Überwachungseingang 46 elektrisch mit dem Sekundärspannungspotential US. Fließt hingegen kein Messstrom IM durch die Optokopplerdiode, sperrt der Optokopplertransistor und das Sekundärspannungspotential US ist elektrisch vom ersten Überwachungseingang 46 getrennt. Durch den Schaltvorgang des Optokopplertransistors kann somit das Vorhandensein eines Messstromes IM im ersten Leiter 42 erfasst werden.

Der Sekundärschaltkreis 44 kann mit Hilfe des Überwachungsbauteils 43 oder des Optokopplers 45 elektrisch auch anders aufgebaut werden. Beispielsweise kann der erste Überwachungseingang 46 unmittelbar mit dem Sekundärspannungspotential US und mit dem Kollektor des Optokopplertransistors verbunden werden. Der Emitter des Optokopplertransistors kann dann über einen Widerstand mit einem gegenüber dem Sekundärspannungspotential US geringeren Potential, beispielsweise einem sekundären Massepotential verbunden werden. In diesem Fall liegt das sekundäre Massepotential am ersten Überwachungseingang 46 an, wenn primärseitig ein Messstrom IM durch den zweiten Leiter 42 fließt, während ansonsten der Optokopplertransistor sperrt und am ersten Überwachungseingang 46 das Sekundärspannungspotential US anliegt.

Auch weitere Abwandlungen der Überwachungseinrichtung 31 bzw. des Sekundärschaltkreises 44 sind möglich. Anstelle des Optokopplers 45 kann auch ein Relais oder ein anderes, einen Schaltvorgang verursachendes Überwachungsbauteil 43 verwendet werden, das mit oder ohne galvanischer Trennung ausgebildet sein kann.

Der zweite Gegenkontakt 39 ist elektrisch über einen zweiten Leiter 49 mit dem Versorgungsspannungspotential UV verbunden, vorzugsweise unmittelbar verbunden. Der dritte Gegenkontakt 40 ist mittels eines dritten Leiters 50 elektrisch mit einem zweiten Überwachungseingang 51 elektrisch verbunden, vorzugsweise unmittelbar.

Wenn eine elektrische und vorzugsweise auch eine mechanische Verbindung zwischen dem Verbindungsbauteil 33 und dem Gegenverbindungsbauteil 34 hergestellt wird, entsteht jeweils eine elektrische Verbindung zwischen dem ersten Kontakt 35 und dem ersten Gegenkontakt 38, zwischen dem zweiten Kontakt 36 und dem zweiten Gegenkontakt 39 und zwischen dem dritten Kontakt 37 und dem dritten Gegenkontakt 40. Aufgrund der Kurzschlussverbindung zwischen dem zweiten und dem dritten Kontakt 36, 37, ist der erste Leiter 49 mit dem dritten Leiter 50 elektrisch verbunden, wodurch das Versorgungsspannungspotential UV am zweiten Überwachungseingang 51 anliegt. Über den zweiten Überwachungseingang 51 kann die Überwachungseinrichtung 31 bzw. die Überwachungseinheit 32 feststellen, dass eine elektrische Verbindung zwischen dem Verbindungsbauteil 33 und dem Gegenverbindungsbauteil 34 hergestellt wurde.

Vorzugsweise ist die Überwachungseinheit 32 dazu eingerichtet, bei erkannter elektrischer Verbindung zwischen dem Verbindungsbauteil 33 und dem Gegenverbindungsbauteil 34 ein entsprechendes Signal zu erzeugen und der Steuereinrichtung 21 bereitzustellen. Diese betreibt die Schleif- und/oder Erodiermaschine 10 dann in einem Sicherheitsbetriebsmodus. Im Sicherheitsbetriebsmodus wird ein Antreiben der Werkzeugspindel 13 um die Spindelachse S und/oder eine Drehung des Messdorns 27 um die Längsachse L verhindert. Eine in die Werkzeugspindel 13 eingesetzte Messscheibe 28 kann dadurch am Rotieren gehindert werden.

Alternativ oder zusätzlich können eine oder mehrere der Maschinenachsen 12 im Sicherheitsbetriebsmodus unter Begrenzung einer Kraft bzw. eines Moments betrieben werden. Dadurch wird verhindert, dass zu große Kräfte oder Momente auf die Messscheibe 28 oder den Messdorn 27 wirken, wenn diese Messkörper 27, 28 miteinander oder mit einem anderen Bauteil der Schleif- und/oder Erodiermaschine 10 in Kontakt gelangen. Hierzu kann beispielsweise das Antriebsmoment eines betreffenden Elektromotors der jeweiligen Maschinenachse 12 begrenzt werden, beispielsweise durch eine entsprechende Strombegrenzung des Motorstromes.

Wenn über die Maschinenachsanordnung 11 die Messscheibe 28 und der Messdorn 27 relativ zueinander bewegt werden und an einer Kontaktstelle K miteinander in Kontakt gelangen, entsteht zwischen der Messscheibe 28 und dem Messdorn 27 eine elektrisch leitende Verbindung. Aufgrund der Potenzialunterschiede zwischen dem an der Messscheibe 28 anliegenden Versorgungsspannungspotential UV und dem an dem Messdorn 27 anliegenden Bezugspotenzial (Masse M), fließt ein Messstrom IM, beispielsgemäß von der Messscheibe 28 über den Messdorn 27 und weiter zur Masse M. Dieser Stromfluss verursacht ein Schalten des Überwachungsbauteils 43, so dass die Überwachungseinrichtung 31 den Stromfluss des Messstromes IM erfassen kann. Zu diesem Zeitpunkt wird eine aktuelle Position der jeweiligen Maschinenachse, die über die Positionserfassungseinrichtung 22 erfasst wird, gespeichert oder anderweitig registriert.

Dieser Anordnung ist es ohne Verwendung von Berührungssensoren oder Näherungssensoren im Arbeitsraum der Schleif- und/oder Erodiermaschine 10 möglich, einen Kontakt zwischen der Messscheibe 28 und dem Messdorn 27 schnell und exakt zu erfassen.

Die Steuereinrichtung 21 ist insbesondere dazu eingerichtet, die Messscheibe 28 an einer vorgegebenen Folge von Kontaktstellen K mit dem Messdorn 27 in Kontakt zu bringen. Die Messscheibe 28 weist vorzugsweise eine Umfangsfläche 54 auf, die den Rand der Messscheibe 28 bildet und deren Kontur begrenzt. Die Umfangsfläche 54 umgibt eine Seitenfläche 55, die von dem Schaftabschnitt 30 abgewandt ist. Die Messscheibe 28 kann entweder mit der Seitenfläche 55 oder mit der Umfangsfläche 54 in Kontakt mit dem Messdorn 27 gebracht werden.

In den Figuren 4-7 ist jeweils das Anfahren einer Kontaktstelle in einer vorgegebenen Ausrichtung zwischen der Längsachse L und der Spindelachse S schematisch veranschaulicht. Zur Vermessung bzw. Referenzierung der Schleif- und/oder Erodiermaschine kann eine Folge von mehreren Kontaktstellen K am Messdorn 27 angefahren und dort die Messscheibe 28 in Kontakt mit dem Messdorn 27 gebracht werden. Dabei kann entweder der Kontakt mit der Seitenfläche 55 oder mit der Umfangsfläche 54 an der Messscheibe 28 hergestellt werden. Die Kontaktstelle K kann an der Mantelfläche 56 oder der Stirnfläche 57 des Messdorns 27 vorhanden sein.

Die Anzahl der Kontaktstellen K entspricht der Anzahl der Maschinenachsen 12, die dazu eingerichtet sind, die Messscheibe 28 relativ zu dem Messdorn 27 zu bewegen. Beispielsgemäß sind dies vier Maschinenachsen, da die A-Achse 12a eine Rotation des Messdorns 27 um seine Längsachse L verursachen kann, was jedoch die Relativposition zwischen der Messscheibe 28 und dem Messdorn 27 nicht ändert. Somit wird der Messdorn 27 entsprechend der drei translatorischen Achsen 12x, 12y und 12z an drei verschiedenen Kontaktstellen K in einer ersten Stellung der C-Achse bei einem vorgegebenen Drehwinkel um die Rotationsachse R angefahren. Zusätzlich wird wenigstens eine Kontaktstelle K unter einer anderen Drehstellung der C-Achse 12c um die Rotationsachse R angefahren. Beispielsweise können die beiden Drehstellungen um die Rotationsachse R um 90° voneinander verschieden sein.

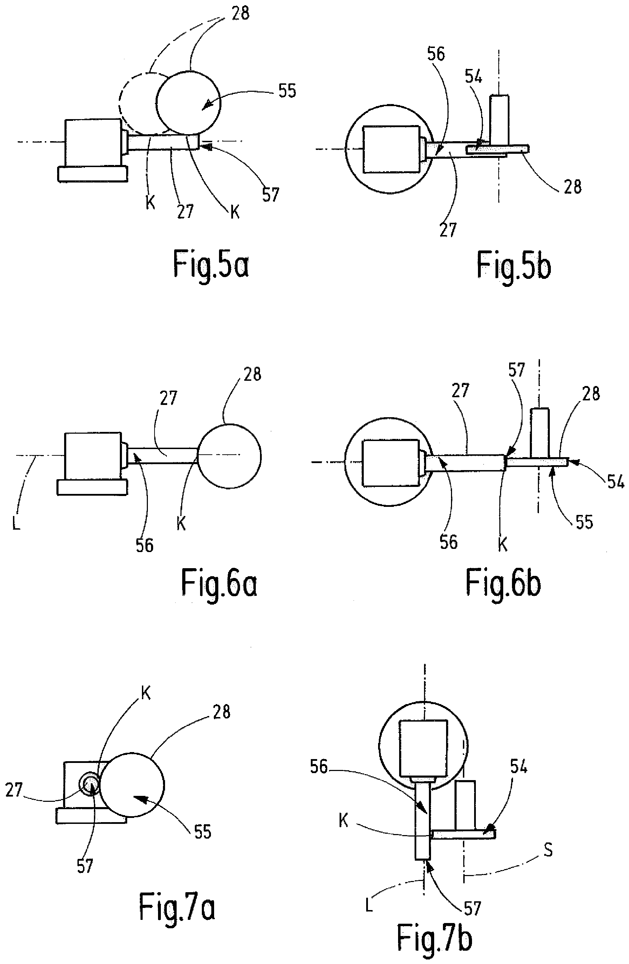

Beim Ausführungsbeispiel kann die Längsachse L zum Beispiel zunächst in x-Richtung ausgerichtet werden (Figuren 4-6). In dieser Ausrichtung des Messdorns 27 wird die Messscheibe 28 unter Verwendung der Y-Achse 12y an einer ersten Kontaktstelle mit der Seitenfläche 55 gegen die Mantelfläche 56 gefahren und die Position dieser ersten Kontaktstelle erfasst (Figuren 4a und 4b). Anschließend wird unter Verwendung der Z-Achse 12z die Umfangsfläche 54 der Messscheibe 28 gegen die Mantelfläche 56 des Messdorns 27 an wenigstens einer weiteren Kontaktstelle K gefahren und die Position erfasst (Figuren 5a und 5b). Schließlich wird eine weitere Kontaktstelle K an der Stirnfläche 57 des Messdorns 27 angefahren, wobei die X-Achse 12x verwendet und die Relativbewegung in diesem Fall über eine Bewegung des Messdorns 27 zur Messscheibe 28 hin erfolgt. Mit der Erfassung dieser drei Kontaktstellen kann die Relativlage der translatorischen Achsen gegenüber der Längsachse L und der Spindelachse S ermittelt werden. Um die rotatorische C-Achse 12c zu referenzieren, wird eine Drehung der C-Achse um einen vorgegebenen Drehwinkel um die Rotationsachse R, beispielsweise 90°, durchgeführt und anschließend ein Kontakt zwischen dem Messdorn 27 und der Messscheibe 28 unter Verwendung von wenigstens einer der translatorischen Achsen 12x, 12y, 12z hergestellt. Bei dem in Figuren 7a und 7b veranschaulichten Ausführungsbeispiel erfolgt diese Relativbewegung durch die X-Achse 12x. In dieser geschwenkten Stellung der C-Achse könnten auch zusätzliche weitere Kontaktstellen K angefahren und die entsprechende Position ermittelt werden.

Mit Hilfe der beschriebenen Schleif- und/oder Erodiermaschine 10 kann eine Vielzahl von geometrischen Messungen durchgeführt werden. Beispielsweise kann der Messdorn 27 entlang der Längsachse L an einer oder mehreren Kontaktstellen K mittels der Messcheibe 28 angefahren werden, beispielsweise unter Verwendung der Y-Achse 12y. Anschließend kann der Messdorn 27 um einen vorgegebenen Drehwinkelbetrag um die Längsachse L gedreht und an derselben Stelle entlang der Längsachse L erneut durch die Messscheibe 28 angefahren werden. Auf diese Weise kann der Rundlauf der A-Achse 12a ermittelt werden.

Auch die Parallelität der A-Achse 12a zur X-Achse 12x kann ermittelt werden. Mit Hilfe der X-Achse 12x können der Messdorn 27 und die Messscheibe 28 an einer Kontaktstelle in Kontakt gebracht werden. Anschließend wird die C-Achse um einen vorgegebenen Drehwinkelbetrag, vorzugsweise 180° gedreht und es wird erneut unter Verwendung der X-Achse 12x eine Kontaktstelle zwischen dem Messdorn 27 und der Messscheibe 28 angefahren. Daraus kann die Achsparallelität ermittelt werden. Analog hierzu kann unter Verwendung der Z-Achse die Parallelität der A-Achse 12a zur Z-Achse 12z ermittelt werden.

Durch Abfahren von mehreren Kontaktstellen K an der Stirnfläche 57 des Messdorns 27 mit Hilfe der Y-Achse 12y kann beispielsweise die Rechtwinkligkeit der A-Achse 12a zur Y-Achse 12y ermittelt werden. Wenn die Stirnfläche 57 hierfür zu klein ist, kann anstelle des Messdorns 27 auch eine mit der Masse M elektrisch verbundene Scheibe als erster Messkörper verwendet werden.

Wenn die A-Achse 12a parallel zur X-Achse 12x ausgerichtet ist, soll die Rotationsachse R die Längsachse L schneiden. Durch Anfahren einer Kontaktstelle K am Schnittpunkt zwischen der Rotationsachse R und der Mantelfläche 56 des Messdorns 27 in unterschiedlichen Dreh- bzw. Schwenkstellungen um die Rotationsachse R kann ein Mittenversatz zwischen der Rotationsachse R und der Längsachse L festgestellt werden.

Mittels der vorstehend beschriebenen Schleif- und/oder Erodiermaschine lassen sich beliebige weitere Vermessungen bzw. Referenzierungen ausführen. Hierzu kann jeweils eine Folge von Kontaktstellen K angefahren werden. Für jede Kontaktstelle kann eine gewünschte Orientierung der Längsachse L relativ zu der Spindelachse S vorgegeben werden. Wenn zusätzlich zu der beispielsgemäß erläuterten C-Achse 12c weitere rotatorische Maschinenachsen vorhanden sind, können auch deren Drehwinkelstellungen für jede Positionserfassung einer Kontaktstelle K vorgegeben sein.

Die beschriebenen Vermessungen bzw. Referenzierungen können auch bei anderen Achsanordnungen entsprechend erfolgen. Ob dabei die Schleifspindel 13 relativ zur Maschinenbasis 15 oder die Werkstückhalteeinrichtung 14 relativ zur Maschinenbasis 15 bewegt wird, hängt von der jeweiligen konkreten Achsanordnung ab.

Die Erfindung betrifft eine Schleif- und/oder Erodiermaschine 10 sowie ein Verfahren zur Vermessung und Referenzierung der Achsanordnung 11 mit mehreren Maschinenachsen 12, die jeweils durch eine rotatorische oder translatorische Maschinenachse gebildet sein können. Hierzu wird ein erster Messkörper (Messdorn 27) in eine Werkstückhalteeinrichtung 14 und ein zweiter Messkörper (Messscheibe 28) in eine Werkzeugspindel 13 eingesetzt. Der Messdorn 27 wird mit einem Bezugspotential, vorzugsweise Masse M elektrisch verbunden. Die Messscheibe 28 wird mit einem Versorgungsspannungspotential UV elektrisch verbunden. Durch Herstellen einer Berührung zwischen der Messscheibe 28 und dem Messdorn 27 fließt ein Messstrom IM zwischen dem Versorgungsspannungspotential UV und dem Bezugspotential und beispielsgemäß vom Versorgungsspannungspotential UV zur Masse M. Das Fließen dieses Messstromes IM kann in einer Überwachungseinrichtung 31 erfasst und die aktuelle Position der Maschinenachsen 12 zum Zeitpunkt des Beginns des Stromflusses des Messstromes IM ermittelt werden. Über die Achsanordnung 11 können eine oder mehrere Kontaktstellen K zwischen der Messscheibe 28 und dem Messdorn 27 angefahren und dadurch eine Referenzierung oder Vermessung der Achsanordnung 11 bzw. der Maschine erfolgen.

### Bezugszeichenliste:

- 10: Schleif- und/oder Erodiermaschine
- 11: Achsanordnung
- 12: Maschinenachse
- 12a: A-Achse
- 12c: C-Achse
- 12x: X-Achse
- 12y: Y-Achse
- 12z: Z-Achse
- 13: Werkzeugspindel
- 14: Werkstückhalteeinrichtung
- 15: erster Schlitten
- 16: zweiter Schlitten
- 17: dritter Schlitten
- 18: Träger
- 19: Werkzeug
- 20: Werkstück
- 21: Steuereinrichtung
- 22: Positionserfassungseinrichtung

- 27: Messdorn
- 28: Messscheibe
- 29: Isolation
- 30: Schaftabschnitt
- 31: Überwachungseinrichtung
- 32: Überwachungseinheit
- 33: Verbindungsbauteil
- 34: Gegenverbindungsbauteil
- 35: erster Kontakt
- 36: zweiter Kontakt
- 37: dritter Kontakt
- 38: erster Gegenkontakt
- 39: zweiter Gegenkontakt
- 40: dritter Gegenkontakt
- 41: Anschlussleitung
- 42: erster Leiter
- 43: Überwachungsbauteil
- 44: Sekundärschaltkreis
- 45: Optokoppler
- 46: erster Überwachungseingang

- 49: zweiter Leiter
- 50: dritter Leiter
- 51: zweiter Überwachungseingang

- 54: Umfangsfläche der Messscheibe
- 55: Seitenfläche der Messscheibe
- 56: Mantelfläche des Messdorns
- 57: Stirnfläche des Messdorns

- IM: Messstrom
- K: Kontaktstelle
- L: Längsachse
- M: Masse
- R: Rotationsachse
- S: Spindelachse
- US: Sekundärspannungspotenzial
- UV: Versorgungsspannungspotenzial

## Patentansprüche

1. Schleif- und/oder Erodiermaschine (10)
mit einer um eine Spindelachse (S) antreibbaren Werkzeugspindel (13), die zur Aufnahme eines Schleif- oder Erodierwerkzeugs (19) eingerichtet ist,
mit einer Werkstückhalteeinrichtung (14), die zur Aufnahme eines Werkstücks (20) eingerichtet ist,
mit einer mehrere Maschinenachsen (12) aufweisenden Maschinenachsanordnung (11), die zur rotatorischen oder translatorischen Bewegung oder Positionierung der Werkzeugspindel (13) und/oder der Werkstückhalteeinrichtung (14) eingerichtet ist, wobei die Werkstückhalterung (14) mittels einer rotatorischen Maschinenachse (12c) um eine Rotationsachse (R) gedreht oder geschwenkt werden kann, um einen Winkel zwischen einer Längsachse (L) der Werkstückhalterung (14) und der Spindelachse (S) einzustellen,
mit einer Positionserfassungseinrichtung (22), die zur Erfassung der Position jeder der vorhandenen Maschinenachsen (12) eingerichtet ist,
mit einem elektrisch leitfähigen ersten Messkörper (27), der dazu eingerichtet ist, in der Werkstückhalteeinrichtung (14) aufgenommen zu werden, und mit einem elektrisch leitfähigen zweiten Messkörper (28), der dazu eingerichtet ist, in der Werkzeugspindel (13) aufgenommen zu werden,
wobei der in der Werkzeugspindel (13) aufgenommene zweite Messkörper (28) mit einem Versorgungsspannungspotenzial (UV) und mit einer Überwachungseinrichtung (31) verbindbar ist, und wobei der in der Werkstückhalteeinrichtung (14) aufgenommene erste Messkörper (27) mit einem definierten Bezugspotenzial (M) verbindbar ist,
mit einer Steuereinrichtung (21), die mit der Überwachungseinrichtung (31) und mit der Positionserfassungseinrichtung (22) verbunden und dazu eingerichtet ist, ein Verfahren zur Vermessung und/oder Referenzierung mit folgenden Schritten durchzuführen:
- Positionieren der Werkstückhalterung (14) in einer ersten Stellung der rotatorischen Maschinenachse (12c) in einem vorgegebenen Drehwinkel um die Rotationsachse (R),
- Antreiben wenigstens einer Maschinenachse (12), um die Messkörper (27, 28) relativ zueinander zu bewegen und an einer Kontaktstelle (K) in Kontakt miteinander zu bringen,
- Abspeichern der aktuellen Position der wenigstens einen angetriebenen Maschinenachse (12), wenn die Überwachungseinrichtung (31) erkennt, dass aufgrund eines Kontakts zwischen den Messkörpern (27, 28) ein Messstrom (IM) fließt,
- Positionieren der Werkstückhalterung (14) in einer anderen Stellung der rotatorischen Maschinenachse (12c) in einem vorgegebenen Drehwinkel um die Rotationsachse (R) und Anfahren einer Kontaktstelle (K) in der anderen Drehstellung.

2. Schleif- und/oder Erodiermaschine nach Anspruch 1,
**dadurch gekennzeichnet, dass** die Steuereinrichtung (21) dazu eingerichtet ist, das Antreiben der wenigstens einen angetriebenen Maschinenachse (12) zu stoppen, wenn die Überwachungseinrichtung (31) erkennt, dass aufgrund eines Kontakts zwischen den Messkörpern (27, 28) ein Messstrom (IM) fließt.

3. Schleif- und/oder Erodiermaschine nach einem der vorhergehenden Ansprüche,
**dadurch gekennzeichnet, dass** der zweite Messkörper als Messscheibe (28) mit einer ringförmig geschlossenen Umfangsfläche (56) ausgeführt ist, die eine Seitenfläche (57) umschließt.

4. Schleif- und/oder Erodiermaschine nach Anspruch 3,
**dadurch gekennzeichnet, dass** die Steuereinrichtung (21) dazu eingerichtet ist, die wenigstens eine Maschinenachse (12) derart anzutreiben, dass die Messscheibe (28) den ersten Messkörper (27) mit der Umfangsfläche (54) oder der Seitenfläche (55) berührt.

5. Schleif- und/oder Erodiermaschine nach einem der vorhergehenden Ansprüche,
**dadurch gekennzeichnet, dass** die Steuereinrichtung (21) dazu eingerichtet ist, die wenigstens einer Maschinenachse (12) derart anzutreiben, dass eine Folge von unterschiedlichen Kontaktstellen (K) nacheinander angefahren wird.

6. Schleif- und/oder Erodiermaschine nach einem der vorhergehenden Ansprüche,
**dadurch gekennzeichnet, dass** Steuereinrichtung (21) dazu eingerichtet ist, die wenigstens einer Maschinenachse (12) derart anzutreiben, dass die Anzahl der nacheinander angefahrenen Kontaktstellen (K) der Anzahl derjenigen Maschinenachsen (12) entspricht, die dazu eingerichtet sind, die Relativposition zwischen den Messkörpern (27, 28) zu ändern.

7. Schleif- und/oder Erodiermaschine nach einem der vorhergehenden Ansprüche,
**dadurch gekennzeichnet, dass** die Überwachungseinrichtung (31) eine Überwachungseinheit (32) aufweist, die dazu eingerichtet ist zu überwachen, ob der zweite Messkörper (28) mit dem Versorgungsspannungspotenzial (UV) elektrisch verbunden ist.

8. Schleif- und/oder Erodiermaschine nach Anspruch 7,
**dadurch gekennzeichnet, dass** die Überwachungseinheit (32) Bestandteil der Steuereinrichtung (21) ist oder mit der Steuereinrichtung (21) kommunikationsverbunden ist und die Steuereinrichtung (21) dazu eingerichtet ist, das Antreiben der Achsanordnung (11) in einem Sicherheitsbetriebsmodus durchzuführen, wenn die Überwachungseinheit (32) die elektrische Verbindung zwischen dem zweiten Messkörper (28) und dem Versorgungsspannungspotenzial (UV) festgestellt hat.

9. Schleif- und/oder Erodiermaschine nach einem der vorhergehenden Ansprüche,
**dadurch gekennzeichnet, dass** der zweite Messkörper (28) über eine Anschlussleitung (41) mit einem ersten Kontakt (35) eines elektrischen Verbindungsbauteils (33) verbunden ist.

10. Schleif- und/oder Erodiermaschine nach Anspruch 9,
**dadurch gekennzeichnet, dass** das elektrische Verbindungsbauteil (33) einen zweiten Kontakt (36) und einen dritten Kontakt (37) aufweist, die miteinander kurzgeschlossen sind.

11. Schleif- und/oder Erodiermaschine nach einem der vorhergehenden Ansprüche,
**dadurch gekennzeichnet, dass** ein elektrisches Gegenverbindungsbauteil (34) mit einem ersten Gegenkontakt (38) vorhanden ist, der mittels eines ersten Leiters (42) über ein Überwachungsbauteil (43) der Überwachungseinrichtung (31) mit dem Versorgungsspannungspotenzial (UV) verbunden ist.

12. Schleif- und/oder Erodiermaschine nach Anspruch 11, **dadurch gekennzeichnet, dass** das Gegenverbindungsbauteil (34) einen zweiten Gegenkontakt (39) aufweist, der mittels eines zweiten Leiters (49) mit dem Versorgungsspannungspotenzial (UV) verbunden ist und dass das Gegenverbindungsbauteil (34) einen dritten Gegenkontakt (40) aufweist, der mittels eines dritten Leiters (50) mit einer Überwachungseinheit (32) der Überwachungseinrichtung (31) verbunden ist.

13. Schleif- und/oder Erodiermaschine nach Anspruch 9 und nach Anspruch 11,
**dadurch gekennzeichnet, dass** bei hergestellter elektrischer Verbindung zwischen dem Verbindungsbauteil (33) und dem Gegenverbindungsbauteil (34) der erste Kontakt (35) elektrisch mit dem ersten Gegenkontakt (38) verbunden ist.

14. Schleif- und/oder Erodiermaschine nach Anspruch 10 und nach Anspruch 12,
**dadurch gekennzeichnet, dass** bei hergestellter elektrischer Verbindung zwischen dem Verbindungsbauteil (33) und dem Gegenverbindungsbauteil (34) der zweite Kontakt (36) elektrisch mit dem zweiten Gegenkontakt (39) verbunden ist, sowie der dritte Kontakt (37) elektrisch mit dem dritten Gegenkontakt (40) verbunden ist.

15. Verfahren zur Vermessung und/oder Referenzierung einer Schleif- und/oder Erodiermaschine (10) mit einer um eine Spindelachse (S) antreibbaren Werkzeugspindel (13), die zur Aufnahme eines Schleif- oder Erodierwerkzeugs (19) eingerichtet ist, mit einer Werkstückhalteeinrichtung (14), die zur Aufnahme eines Werkstücks (20) eingerichtet ist, mit einer mehrere Maschinenachsen (12) aufweisenden Maschinenachsanordnung (11), die zur rotatorischen oder translatorischen Bewegung oder Positionierung der Werkzeugspindel (13) und/oder der Werkstückhalteeinrichtung (14) eingerichtet ist, wobei die Werkstückhalterung (14) mittels einer rotatorischen Maschinenachse (12c) um eine Rotationsachse (R) gedreht oder geschwenkt werden kann, um einen Winkel zwischen einer Längsachse (L) der Werkstückhalterung (14) und der Spindelachse (S) einzustellen, mit einer Positionserfassungseinrichtung (22), die zur Erfassung der Position jeder der vorhandenen Maschinenachsen (12) eingerichtet ist, mit einem elektrisch leitfähigen ersten Messkörper (27), mit einem elektrisch leitfähigen zweiten Messkörper (28), und mit einer Steuereinrichtung (21), wobei das Verfahren folgenden Schritte aufweist:
- Einsetzen des ersten Messkörpers (27) in der Werkstückhalteeinrichtung (14) und elektrisches Verbinden des ersten Messkörpers (27) mit einem definierten Bezugspotenzial (M),
- Einsetzen des zweiten Messkörpers (28) in die Werkzeugspindel (13) und elektrisches Verbinden des zweiten Messkörpers (28) mit einem Versorgungsspannungspotenzial (UV) und einer Überwachungseinrichtung (31),
- Positionieren der Werkstückhalterung (14) in einer ersten Stellung der rotatorischen Maschinenachse (12c) in einem vorgegebenen Drehwinkel um die Rotationsachse (R),
- Antreiben wenigstens einer Maschinenachse (12), um die Messkörper (27, 28) relativ zueinander zu bewegen und an einer Kontaktstelle (K) miteinander in Kontakt zu bringen,
- Abspeichern der aktuellen Position der wenigstens einen angetriebenen Maschinenachse (12), wenn die Überwachungseinrichtung (31) erkennt, dass aufgrund eines Kontakts zwischen den Messkörpern (27, 28) ein Messstrom (IM) fließt,
- Positionieren der Werkstückhalterung (14) in einer anderen Stellung der rotatorischen Maschinenachse (12c) in einem vorgegebenen Drehwinkel um die Rotationsachse (R) und Anfahren einer Kontaktstelle (K) in der anderen Drehstellung.

## Claims

1. Grinding and/or erosion machine (10)
having a tool spindle (13) that can be driven about a spindle axis (S), said tool spindle being configured for the accommodation of a grinding or erosion tool (19),
having a workpiece holding device (14) being disposed for accommodating a workpiece (20),
having a machine axis arrangement (11) comprising several machine axes (12), said axis arrangement being configured for the rotational or translational movement or for the positioning of the tool spindle (13) and/or the workpiece holding device (14), wherein the workpiece holding device (14) can be rotated or pivoted by means of a rotation axis (12c) about the axis of rotation (R) in order to adjust the angle between a longitudinal axis (L) of the workpiece holding device (14) and the spindle axis (S),
having a position detecting device (22), said device being configured for detecting the position of each of the present machine axes (12),
having an electrically conductive first measuring body (27), said measuring body configured to be accommodated in the workpiece holding device (14) and with an electrically conductive second measuring body (28) configured to be accommodated in the tool spindle (13),
wherein the second measuring body (28) accommodated in the tool spindle (13) can be connected to a supply voltage potential (UV) and a monitoring device (31), and wherein the first measuring body (27) accommodated in the workpiece holding device (14) can be connected to a specified reference potential (M),
having a control device (21) that is connected to the monitoring device (31) and to the position detecting device (22) and is configured to performing a method for gauging and/or referencing, comprising the following steps:
- Posistioning the workpiece holding device (14) in a first position of the rotation axis (12c) at a specified angle of rotation about the axis of rotation (R),
- Driving at least one machine axis (12) in order to move the measuring bodies (27, 28) relative to each other and to bring them into contact with each other at a contact location (K),
- Storing in memory the actual positions of the at least one driven machine axis (12) when the monitoring device (31) detects that, due to a contact, a measuring current (IM) flows between the measuring bodies (27, 28),
- Posistioning the workpiece holding device (14) in another position of the rotation axis (12c) at a specified angle of rotation about the axis of rotation (R) and moving to a contact location (K) in the other position of the rotation axis (12c).

2. Grinding and/or erosion machine according to claim 1, **characterized in that** the control device (21) is configured to stop the driving of the at least one driven machine axis (12) when the monitoring device (31) detects that a measuring current (IM) flows due to a contact between the measuring bodies (27, 28).

3. Grinding and/or erosion machine according to one of the previous claims,
**characterized in that** the second measuring body is configured as measuring disk (28) with a circumferential surface (56) that is closed in a ring-shaped manner, said circumferential surface enclosing a lateral surface (57).

4. Grinding and/or erosion machine according to claim 3,
**characterized in that** the control device (21) is configured to drive the at least one machine axis (12) in such a manner that the measuring disk (28) contacts the first measuring body (27) with the circumferential surface (54) or lateral surface (55).

5. Grinding and/or erosion machine according to one of the previous claims,
**characterized in that** the control device (21) is configured to drive the at least one machine axis (12) in such a manner that a sequence of different contact locations (K) are successively reached.

6. Grinding and/or erosion machine according to one of the previous claims,
**characterized in that** the control device (21) is configured to drive the at least one machine axis (12) in such a manner that the number of successively reached contact locations (K) corresponds to the number of those machine axes (12) that are configured to change the relative position between the measuring bodies (27, 28).

7. Grinding and/or erosion machine according to one of the previous claims,
**characterized in that** the monitoring device (31) comprises a monitoring unit (32) that is configured to monitor whether the second measuring body (28) is electrically connected to the supply voltage potential (UV).

8. Grinding and/or erosion machine according to claim 7,
**characterized in that** the monitoring unit (32) is part of the control device (21) or is communicationally connected to the control device (21), and that the control device (21) is configured to drive the axis arrangement (11) in a safety operation mode, if the monitoring unit (32) has determinded the electrical connection between the second measuring body (28) and the supply voltage potential (UV).

9. Grinding and/or erosion machine according to one of the previous claims,
**characterized in that** the second measuring body (28) is connected to a first contact (35) of an electrical connecting component (33) via a connecting line (41).

10. Grinding and/or erosion machine according to claim 9,
**characterized in that** the electrical connecting component (33) has a second contact (36) and a third contact (37) that are short-circuited with each other.

11. Grinding and/or erosion machine according to one of the previous claims,
**characterized in that** an electrical counter connecting component (34) with a first counter contact (38) is present, which is connected to the supply voltage potential (UV) by means of a first conductor (42) via a monitoring component (43) of the monitoring device (31).

12. Grinding and/or erosion machine according to claim 11,
**characterized in that** the counter-connecting component (34) has a second counter contact (39) that is connected to the supply voltage potential (UV) by means of a second conductor (49), and that the counter-connecting component (34) comprises a third counter contact (40) that is connected to a monitoring unit (32) of the motoring device (31) by means of a third conductor (50).

13. Grinding and/or erosion machine according to claim 9 and according to claim 11,
**characterized in that**, with the electrical connection between the connecting component (33) and the counter-connecting component (34) established, the first contact (35) is electrically connected to the first counter contact (38).

14. Grinding and/or erosion machine according to claim 10 and according to claim 12,
**characterized in that**, with the electrical connection between the connecting component (33) and the counter-connecting component (34) established, the second contact (36) is electrically connected to the second counter contact (39), and also the third contact (37) is electrically connected to the third counter contact (40).

15. Method for gauging and/or referencing a grinding and/or erosion machine (10), with a tool spindle (13) that can be driven about a spindle axis (S), said tool spindle being configured for the accommodation of a grinding and erosion tool (19), having a workpiece holding device (14), said device being configured for the accommodation of a workpiece (20), having a machine axis arrangement (11) comprising several machine axes (12), said axis arrangement being configured for the rotational or translational movement or positioning of the tool spindle (13) and/or the workpiece holding device (14), wherein the workpiece holding device (14) can be rotated or pivoted by means of a rotation axis (12c) about the axis of rotation (R) in order to adjust the angle between a longitudinal axis (L) of the workpiece holding device (14) and the spindle axis (S), having a position detecting device (22), said device being configured for the detection of the position of each of the present machine axes (12), having an electrically conductive first measuring body (27), having an electrically conductive second measuring body (28), and having a control device (21), wherein the method comprises the following steps:
- Inserting the first measuring body (27) in the workpiece holding device (14) and electrically connecting the first measuring body (27) to a defined reference potential (M),
- Inserting the second measuring body (28) in the tool spindle (13) and electrically connecting the second measuring body (28) to a supply voltage potential (UV) and a monitoring device (31),
- Posistioning the workpiece holding device (14) in a first position of the rotation axis (12c) at a specified angle of rotation about the axis of rotation (R),
- Driving at least one machine axis (12) in order to move the measuring bodies (27, 28) relative to each other and to bring them into contact with each other at a contact location (K),
- Storing in memory the actual position of the at least one driven machine axis (12) when the monitoring device (31) detects that, due to a contact, a measuring current (IM) flows between the measuring bodies (27, 28)
- Posistioning the workpiece holding device (14) in another position of the rotation axis (12c) at a specified angle of rotation about the axis of rotation (R) and moving to a contact location (K) in the other position of the rotation axis (12c).

## Revendications

1. Machine de ponçage et/ou d'électroérosion (10),
comprenant une broche d'outil (13) qui peut être entraînée autour d'un axe de broche (S) et est conçue pour accueillir un outil de ponçage ou d'électroérosion (19),
comprenant un dispositif porte-pièce (14) qui est conçu pour accueillir une pièce (20),
comprenant un système d'axes de machine (11) qui comporte plusieurs axes de machine (12) et est conçu pour le mouvement ou le positionnement rotatoire ou translatoire de la broche d'outil (13) et/ou du dispositif porte-pièce (14), le dispositif porte-pièce (14) pouvant être tourné ou pivoté autour d'un axe de rotation (R) à l'aide d'un axe de machine rotatoire (12c), en vue de régler un angle entre un axe longitudinal (L) du dispositif porte-pièce (14) et l'axe de broche (S),
comprenant un dispositif de détection de position (22) qui est conçu pour détecter la position de chacun des axes de machine (12) présents,
comprenant un premier corps de mesure (27) conducteur électrique qui est conçu pour être monté dans le dispositif porte-pièce (14), et comprenant un deuxième corps de mesure (28) conducteur électrique qui est conçu pour être monté dans la broche d'outil (13),
le deuxième corps de mesure (28), qui est monté dans la broche d'outil (13), pouvant être relié à un potentiel de tension d'alimentation (UV) et à un dispositif de surveillance (31), et le premier corps de mesure (27), qui est monté dans le dispositif porte-pièce (14), pouvant être relié à un potentiel de référence (M) défini,
comprenant un dispositif de commande (21) qui est relié au dispositif de surveillance (31) et au dispositif de détection de position (22) et est conçu pour mettre en oeuvre un procédé de mesure et/ou de référencement, comprenant les étapes suivantes :
- positionnement du dispositif porte-pièce (14) dans une première position de l'axe de machine rotatoire (12c), avec un angle de rotation prédéterminé autour de l'axe de rotation (R),
- entraînement d'au moins un axe de machine (12), aux fins de déplacer les corps de mesure (27, 28) l'un par rapport à l'autre et de les amener en contact réciproque en un point de contact (K),
- enregistrement de la position actuelle de l'axe de machine (12) entraîné, au nombre d'au moins un, lorsque le dispositif de surveillance (31) détecte qu'un courant de mesure (IM) circule en raison d'un contact entre les corps de mesure (27, 28),
- positionnement du dispositif porte-pièce (14) dans une autre position de l'axe de machine rotatoire (12c), avec un angle de rotation prédéterminé autour de l'axe de rotation (R), et sélection d'un point de contact (K) dans l'autre position de rotation.

2. Machine de ponçage et/ou d'électroérosion selon la revendication 1,
**caractérisée en ce que** le dispositif de commande (21) est conçu pour arrêter l'entraînement de l'axe de machine entraîné (12), au nombre d'au moins un, lorsque le dispositif de surveillance (31) détecte qu'un courant de mesure (IM) circule en raison d'un contact entre les corps de mesure (27, 28).

3. Machine de ponçage et/ou d'électroérosion selon l'une des revendications précédentes,
**caractérisée en ce que** le deuxième corps de mesure est réalisé comme disque de mesure (28) comportant une surface périphérique (56) qui est fermée sous une forme annulaire et entoure une surface latérale (57).

4. Machine de ponçage et/ou d'électroérosion selon la revendication 3,
**caractérisée en ce que** le dispositif de commande (21) est conçu pour entraîner l'axe de machine (12), au nombre d'au moins un, de manière à ce que le disque de mesure (28) soit en contact avec le premier corps de mesure (27) par la surface périphérique (54) ou la surface latérale (55).

5. Machine de ponçage et/ou d'électroérosion selon l'une des revendications précédentes,
**caractérisée en ce que** le dispositif de commande (21) est conçu pour entraîner l'axe de machine (12), au nombre d'au moins un, de manière à ce qu'une suite de points de contact (K) différents soit sélectionnée successivement.

6. Machine de ponçage et/ou d'électroérosion selon l'une des revendications précédentes,
**caractérisée en ce que** le dispositif de commande (21) est conçu pour entraîner l'axe de machine (12), au nombre d'au moins un, de manière à ce que le nombre des points de contact (K) sélectionnés les uns à la suite des autres corresponde au nombre des axes de machine (12) qui sont conçus pour modifier la position relative entre les corps de mesure (27, 28).

7. Machine de ponçage et/ou d'électroérosion selon l'une des revendications précédentes,
**caractérisée en ce que** le dispositif de surveillance (31) présente une unité de surveillance (32) qui est conçue pour surveiller si le deuxième corps de mesure (28) est relié électriquement au potentiel de tension d'alimentation (UV).

8. Machine de ponçage et/ou d'électroérosion selon la revendication 7,
**caractérisée en ce que** l'unité de surveillance (32) fait partie du dispositif de commande (21) ou est reliée sur le plan de la communication au dispositif de commande (21), et le dispositif de commande (21) est conçu pour effectuer l'entraînement du système d'axes (11) dans un mode de fonctionnement sécurisé, lorsque l'unité de surveillance (32) a constaté la liaison électrique entre le deuxième corps de mesure (28) et le potentiel de tension d'alimentation (UV).

9. Machine de ponçage et/ou d'électroérosion selon l'une des revendications précédentes,
**caractérisée en ce que** le deuxième corps de mesure (28) est relié par une ligne de raccordement (41) à un premier contact (35) d'un composant de connexion électrique (33).

10. Machine de ponçage et/ou d'électroérosion selon la revendication 9,
**caractérisée en ce que** le composant de connexion électrique (33) présente un deuxième contact (36) et un troisième contact (37) qui sont court-circuités l'un avec l'autre.

11. Machine de ponçage et/ou d'électroérosion selon l'une des revendications précédentes,
**caractérisée en ce qu'**il est prévu un composant de connexion électrique conjugué (34) doté d'un premier contact conjugué (38) qui est relié au potentiel de tension d'alimentation (UV) à l'aide d'un premier conducteur (43), par l'intermédiaire d'un composant de surveillance (43) du dispositif de surveillance (31).

12. Machine de ponçage et/ou d'électroérosion selon la revendication 11,
**caractérisée en ce que** le composant de connexion conjugué (34) présente un deuxième contact conjugué (39) qui est relié au potentiel de tension d'alimentation (UV) à l'aide d'un deuxième conducteur (49), et **en ce que** le composant de connexion conjugué (34) présente un troisième contact conjugué (40) qui est relié à une unité de surveillance (32) du dispositif de surveillance (31) à l'aide d'un troisième conducteur (50).

13. Machine de ponçage et/ou d'électroérosion selon la revendication 9 et selon la revendication 11,
**caractérisée en ce que**, lorsque la connexion électrique est établie entre le composant de connexion (33) et le composant de connexion conjugué (34), le premier contact (35) est relié électriquement au premier contact conjugué (38).

14. Machine de ponçage et/ou d'électroérosion selon la revendication 10 et selon la revendication 12,
**caractérisée en ce que**, lorsque la connexion électrique est établie entre le composant de connexion (33) et le composant de connexion conjugué (34), le deuxième contact (36) est relié électriquement au deuxième contact conjugué (39), et le troisième contact (37) est relié électriquement au troisième contact conjugué (40).

15. Procédé pour mesurer et/ou référencer une machine de ponçage et/ou d'électroérosion (10) comprenant une broche d'outil (13) qui peut être entraînée autour d'un axe de broche (S) et est conçue pour accueillir un outil de ponçage ou d'électroérosion (19), comprenant un dispositif porte-pièce (14) qui est conçu pour accueillir une pièce (20), comprenant un système d'axes de machine (11) qui comporte plusieurs axes de machine (12) et est conçu pour le mouvement ou le positionnement rotatoire ou translatoire de la broche d'outil (13) et/ou du dispositif porte-pièce (14), le dispositif porte-pièce (14) pouvant être tourné ou pivoté autour d'un axe de rotation (R) à l'aide d'un axe de machine rotatoire (12c), en vue de régler un angle entre un axe longitudinal (L) du dispositif porte-pièce (14) et l'axe de broche (S), comprenant un dispositif de détection de position (22) qui est conçu pour détecter la position de chacun des axes de machine (12) présents, comprenant un premier corps de mesure (27) conducteur électrique, comprenant un deuxième corps de mesure (28) conducteur électrique, et comprenant un dispositif de commande (21), le procédé présentant les étapes suivantes :
- mise en place du premier corps de mesure (27) dans le dispositif porte-pièce (14), et raccordement électrique du premier corps de mesure (27) à un potentiel de référence (M) défini,
- mise en place du deuxième corps de mesure (28) dans la broche d'outil (13), et raccordement électrique du deuxième corps de mesure (28) à un potentiel de tension d'alimentation (UV) et un dispositif de surveillance (31),
- positionnement du dispositif porte-pièce (14) dans une première position de l'axe de machine rotatoire (12c), avec un angle de rotation prédéterminé autour de l'axe de rotation (R),
- entraînement d'au moins un axe de machine (12), aux fins de déplacer les corps de mesure (27, 28) l'un par rapport à l'autre et de les amener en contact réciproque en un point de contact (K),
- enregistrement de la position actuelle de l'axe de machine (12) entraîné, au nombre d'au moins un, lorsque le dispositif de surveillance (31) détecte qu'un courant de mesure (IM) circule en raison d'un contact entre les corps de mesure (27, 28),
- positionnement du dispositif porte-pièce (14) dans une autre position de l'axe de machine rotatoire (12c), avec un angle de rotation prédéterminé autour de l'axe de rotation (R), et sélection d'un point de contact (K) dans l'autre position de rotation.
